(19) Europäisches Patentamt
European Patent Office
Office européen des brevets

(11) **EP 4 220 888 A2**

(12) **EUROPÄISCHE PATENTANMELDUNG**

(43) Veröffentlichungstag:
**02.08.2023   Patentblatt 2023/31**

(21) Anmeldenummer: **23175275.9**

(22) Anmeldetag: **27.01.2017**

(51) Internationale Patentklassifikation (IPC):
**H02J 3/46** (2006.01)     **F03D 7/02** (2006.01)
**H02J 3/38** (2006.01)     H02J 3/24 (2006.01)

(52) Gemeinsame Patentklassifikation (CPC):
**F03D 7/0284; H02J 3/381; H02J 3/46;**
F05B 2270/335; H02J 3/241; H02J 2300/28;
Y02E 10/72; Y02E 10/76

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **27.01.2016   DE 102016101469**

(62) Dokumentnummer(n) der früheren Anmeldung(en)
nach Art. 76 EPÜ:
**17701869.4 / 3 408 914**

(71) Anmelder: **Wobben Properties GmbH
26607 Aurich (DE)**

(72) Erfinder: **Brombach, Johannes
13437 Berlin (DE)**

(74) Vertreter: **Eisenführ Speiser
Patentanwälte Rechtsanwälte PartGmbB
Postfach 10 60 78
28060 Bremen (DE)**

Bemerkungen:
Diese Anmeldung ist am 25.05.2023 als
Teilanmeldung zu der unter INID-Code 62 erwähnten
Anmeldung eingereicht worden.

(54) **VERFAHREN ZUM EINSPEISEN ELEKTRISCHER LEISTUNG IN EIN ELEKTRISCHES VERSORGUNGSNETZ**

(57)     Die Erfindung betrifft ein Verfahren zum Einspeisen elektrischer Leistung an einem Netzanschlusspunkt (118) in ein elektrisches Versorgungsnetz (120) mittels wenigstens einer Windenergieanlage umfassend die Schritte Erzeugen elektrischer Leistung aus Wind, Einspeisen der erzeugten Leistung oder eines Teils davon in das elektrische Versorgungsnetz, Anbieten einer Momentanreserve zum zusätzlichen Einspeisen oder Verringern des Einspeisens in das elektrische Versorgungsnetz zur Stützung des elektrischen Versorgungsnetzes und zusätzliches Einspeisen elektrischer Leistung oder Reduzieren der eingespeisten Leistung bis zur angebotenen Momentanreserve, in Abhängigkeit einer Netzeigenschaft und/oder einer externen Anforderung, um das elektrische Versorgungsnetz zu stützen, wobei die Höhe der angebotenen Momentanreserve als Reservehöhe (Angebotshöhe) einstellbar ist, wobei die Reservehöhe in Abhängigkeit wenigstens eines Kriteriums eingestellt wird, das ausgewählt ist aus der Liste aufweisend eine Kurzschlussleistung am Netzanschlusspunkt, eine Netzimpedanz am Netzanschlusspunkt, ein Kurzschlussstromverhältnis am Netzanschlusspunkt und ein Erkennen einer Teilnetzbildung.

Fig. 6

EP 4 220 888 A2

**Beschreibung**

Die vorliegende Erfindung betrifft ein Verfahren zum Einspeisen elektrischer Leistung in ein elektrisches Versorgungsnetz. Außerdem betrifft die vorliegende Erfindung eine Windenergieanlage zum Durchführen eines solchen Verfahrens und die Erfindung betrifft auch einen mehrere Windenergieanlagen aufweisenden Windpark zum Durchführen eines solchen Verfahrens. Die Erfindung betrifft auch eine Anordnung mehrerer Windenergieanlagen oder mehrerer Windparks zum Einspeisen an mehreren Netzanschlusspunkten.

Es ist bekannt, mit Windenergieanlagen elektrische Leistung in ein elektrisches Versorgungsnetz, wie beispielsweise in das europäische Verbundnetz, einzuspeisen. Zum Einspeisen verwenden solche Windenergieanlagen üblicherweise Frequenzwechselrichter, mit denen direkt oder indirekt der elektrische Strom mit der gewünschten Frequenz und Phase in das elektrische Versorgungsnetz eingespeist wird. Diese Art der Einspeisung weicht somit wesentlich von der Art der Einspeisung herkömmlicher Großkraftwerke ab, die zum Einspeisen einen direkt mit dem elektrischen Versorgungsnetz gekoppelten Synchrongenerator verwenden. Solche direkt mit dem Netz gekoppelte Synchrongeneratoren sollen eine stabilisierende Wirkung auf das elektrische Versorgungsnetz haben, das vereinfachend auch nur als Netz bezeichnet werden kann.

Durch zunehmenden Anteil von regenerativen Energiequellen im Netz, besonders Windenergieanlagen, wird somit eine Abnahme dieser stabilisierenden Wirkung durch Synchrongeneratoren im Netz befürchtet.

Um das elektrische Versorgungsnetz auch mit Hilfe von Windenergieanlagen zu stabilisieren, sind bereits Verfahren bekannt, bei denen beispielsweise in Abhängigkeit der Netzfrequenz oder der Netzspannung die eingespeiste Leistung verändert wird. Als Beispiel für eine solche frequenzabhängige Leistungsregelung wird auf das Dokument US-2003-0155773-A1 verwiesen und für eine Spannungsabhängige Leistungsregelung wird auf das Dokument WO99/33165 verwiesen. Besonders für die Stützung des elektrischen Versorgungsnetzes mittels Windparks wird auch vorgeschlagen, dass ein solcher Windpark seine eingespeiste Leistung in Abhängigkeit externer Signale verändert, die besonders durch den Netzbetreiber eingegeben werden können. Dazu wird beispielhaft verwiesen auf die Offenlegungsschrift US-2006-0142899-A1. Einiges dieser Vorschläge ist teilweise auch schon in Netzanschlussregeln aufgenommen worden.

Möglicherweise sind solche Lösungen aber nicht weitreichend genug, besonders dann, wenn die noch immer im elektrischen Versorgungsnetz vorhandenen Großkraftwerke mit direkt gekoppelten Synchrongeneratoren in ihrer Dominanz zurückgehen, oder im extremsten Falle sogar gänzlich verschwinden.

Hierfür wurden bereits Lösungen vorgeschlagen, das Verhalten eines Synchrongenerators zu emulieren. Das europäische Patent EP 1 790 850 B1 schlägt dazu vor, einen internen Referenzrahmen zu verwenden, der als Integrator implementiert ist und eine virtuelle Trägheit emuliert, um ein variables Referenzfrequenzsignal bereitzustellen.

Aber auch bei solchen Lösungen können Stabilitätsprobleme im Netz bestehen bleiben, größer werden oder neu hinzukommen. Zunächst ist zu beachten, dass auch eine Stabilisierung des Netzes durch Synchrongeneratoren nicht durchweg ideal funktioniert. Die große Trägheit der Synchrongeneratoren schafft zwar einerseits eine vergleichmäßigende und dadurch zumindest teilweise stabilisierende Wirkung, kann aber auch einer schnellen Regelung im Wege stehen. Es sind beispielsweise Netzpendelungen bekannt, bei denen solche Synchrongeneratoren mehrerer Großkraftwerke gegeneinander schwingen können. Es ist auch zu beachten, dass eine vollständige Emulation eines Großkraftwerkes nicht nur das grundsätzliche Verhalten eines Synchrongenerators emulieren müsste, sondern auch dessen Größe, die insbesondere durch die jeweilige Nennleistung angegeben werden kann. Derzeit werden viele Windenergieanlagen benötigt, um auf die Nennleistung eines Großkraftwerkes zu kommen. Selbst Windparks mit mehreren Windenergieanlagen weisen regelmäßig eine deutlich geringere Leistung auf als ein Großkraftwerk. Somit bleibt wenigstens auch der Unterschied bestehen, dass Windenergieanlagen gegenüber Großkraftwerken sehr viel stärker dezentral einspeisen.

Das Deutsche Patent- und Markenamt hat in der Prioritätsanmeldung zur vorliegenden Anmeldung folgenden Stand der Technik recherchiert: US 2003/0155773 A1, US 2006/0142899 A1, US 2011/0074151 A1, US 2014/0316592 A1, EP 1 790 850 B1, WO 99/33165 A1, WO 2014/121794 A1 und Ruttledge, L, Flynn, D.: "Emulated Inertial Response From Wind Turbines: Gain Scheduling and Resource Coordination" in IEEE Transactions on Power Systems, vol. 31, no. 5, pp. 3747-3755, 28.12.2015.

Der vorliegenden Erfindung liegt somit die Aufgabe zugrunde, zumindest eines der oben genannten Probleme zu adressieren. Insbesondere soll eine Lösung vorgeschlagen werden, die bekannte Verfahren der Netzstützung verbessert, zumindest einen weiteren Beitrag zur Netzstützung liefert. Zumindest soll eine alternative Lösung vorgeschlagen werden.

Erfindungsgemäß wird somit ein Verfahren gemäß Anspruch 1 vorgeschlagen. Demnach wird ein Verfahren zum Einspeisen elektrischer Leistung an einem Netzanschlusspunkt in ein elektrisches Versorgungsnetz vorgeschlagen, wobei die Einspeisung an dem Netzanschlusspunkt mittels wenigstens einer Windenergieanlage folgt. Es können dafür auch mehrere Windenergieanlagen insbesondere ein Windpark vorgesehen sein.

Dabei erzeugt die Windenergieanlage, oder ggf. die mehreren Windenergieanlagen, elektrische Leistung aus Wind. Diese Leistung die entsprechend erzeugt bzw. aus Leistung aus dem Wind umgewandelt wurde, wird in das elektrische Versorgungsnetz eingespeist. Die von dem aerodynamischen Rotor erzeugte Leistung und die eingespeiste Leistung können unterschiedlich sein, weil z.B. Verluste auftreten und/oder gespeicherte Energie mit verwendet werden kann. Vereinfachend wird aber bevorzugt die gesamte aus dem Wind erzeugte Leistung in das elektrische Versorgungsnetz eingespeist. Das kann besonders über einen Frequenzwechselrichter erfolgen, der bspw. die durch die Windenergieanlage erzeugte elektrische Leistung gleichrichtet erhält und dann aus dieser gleichgerichteten Leistung, also insbesondere basierend auf gleichgerichteter Spannung in einem Gleichspannungszwischenkreis, mittels eines Wechselrichters einen gewünschten Strom nach Betrag und Phase erzeugt und einspeist.

Außerdem wird vorgeschlagen, eine Momentanreserve zum zusätzlichen Einspeisen oder Verringern des Einspeisens in das elektrische Versorgungsnetz zur Stützung des elektrischen Versorgungsnetzes anzubieten. Die wenigstens eine Windenergieanlage oder auch eine andere damit verknüpfte Steuereinrichtung bietet somit eine Momentanreserve an. Das bedeutet besonders, dass eine solche Momentanreserve bereit gehalten wird und vorzugsweise auch Informationen von der betreffenden wenigstens einen Windenergieanlage oder auch der genannten Steuereinrichtung bereitgestellt werden, so das andere Windenergieanlagen, andere Erzeuger im elektrischen Versorgungsnetz oder auch der Netzbetreiber diese Momentanreserve kennen und sich darauf einstellen können.

Entsprechend wird bei Bedarf bis zu dieser angebotenen Momentanreserve auch in das elektrische Versorgungsnetz eingespeist. Je nach Netzzustand kommt auch in Betracht, das Einspeisen der elektrischen Leistung zu reduzieren, um dadurch das Netz zu stützen. Auch das ist darin beinhaltet, dass diese Momentanreserve angeboten wird. Nachfolgende Erläuterungen zur Erhöhung des Einspeisens betreffen sinngemäß auch den Fall, das Einspeisen der elektrischen Leistung zu reduzieren. Dabei kann die angebotene Momentanreserve oder ein Teil davon in Abhängigkeit einer Netzeigenschaft und außerdem oder alternativ in Abhängigkeit einer externen Anforderung eingespeist bzw. die Einspeisung reduziert werden, um dadurch das elektrische Versorgungsnetz zu stützen. Die Momentanreserve wird also angeboten und für den tatsächlich dann auftretenden Bedarf auch bereitgestellt. Bei einer Einspeisung in Abhängigkeit einer Netzeigenschaft kommt auch in Betracht, dass diese Abhängigkeit bzw. eine entsprechend hinterlegte oder zugrundegelegte Abhängigkeitsfunktion nur einen Teil der Momentanreserve benötigt. Dabei kann diese Einspeisung in Abhängigkeit einer Netzeigenschaft bspw. eine Einspeisung in Abhängigkeit einer Netzfrequenz oder einer Netzspannung erfolgen. Es wird nun weiter vorgeschlagen, dass die Höhe der angebotenen Momentanreserve, die hier als Reservehöhe oder synonym auch als Angebotshöhe bezeichnet wird, einstellbar ist. Die wenigstens eine Windenergieanlage bietet somit eine Momentanreserve an, die sie bei Bedarf auch einspeist und die zum Netzstützen verwendet werden kann. Diese Momentanreserve ist allerdings kein fester Wert, sondern kann eingestellt werden.

Mit dem Bereitstellen einer Momentreserve wird zunächst erreicht, dass grundsätzlich eine Stützung des elektrischen Versorgungsnetzes auch durch Windenergieanlagen, also durch diese wenigstens eine Windenergieanlage, vorgenommen werden kann. Insoweit sind gewisse Parallelen zu einem direkt gekoppelten Synchrongenerator erkennbar. Ein solcher direkt gekoppelter Synchrongenerator stellt eine Momentanreserve durch seine hohe Drehzahl in Verbindung mit einer rotierenden Masse bereit und diese wird dann regelmäßig durch das physikalische Verhalten dieses Synchrongenerators abgerufen. Ergibt sich bspw. ein Zustand im Netz, bei dem mehr Leistung verbraucht als in dem Moment eingespeist wird, wirkt sich das auf den direkt gekoppelten Synchrongenerator aus. Insbesondere liefert er dann mehr Leistung, wodurch er langsamer wird, was sich regelmäßig auch als Frequenzverringerung im Netz bemerkbar macht. In diesem Fall gibt also der Synchrongenerator einen Teil seiner Rotationsenergie an das elektrische Versorgungsnetz ab.

Durch das Bereitstellen einer Momentanreserve durch die wenigstens eine Windenergieanlage wird somit zunächst auch erreicht, dass eine Netzstützung erfolgen kann, wenn mehr Leistung verbraucht als erzeugt wird. Zum Ausgleich kann kurzfristig mehr Leistung eingespeist werden. Ist mehr Leistung im elektrischen Versorgungsnetz als verbraucht wird, kann zum Ausgleich kurzzeitig weniger Leistung eingespeist werden. In dem Fall, dass mehr Leistung eingespeist werden soll, kann die wenigstens eine Windenergieanlage ihre Momentanreserve oder einen Teil davon zur Netzstützung einspeisen.

Dem liegt besonders auch der Gedanke zugrunde, dass teilweise schon heute sehr viel Reserveenergie in der Drehbewegung von Windenergieanlagen enthalten ist. Eine Windenergieanlage dürfte zwar weniger Rotationsenergie gespeichert haben als ein Großkraftwerk in seinem direkt gekoppelten Synchrongenerator, es gibt dafür aber sehr viele Windenergieanlagen. Bezogen auf die Nennleistung haben Windenergieanlagen häufig eine größere Rotationsenergie. Die Rotoren moderner Windenergieanlagen haben große Durchmesser mit durch ihre Größe bedingt auch schweren Rotorblättern und haben dadurch ein hohes Trägheitsmoment. Entsprechend kann trotz vergleichsweise geringer Drehzahl viel Energie darin gespeichert werden. Diese Energie kann zum Netzstützen verwendet werden.

Allerdings gibt es auch andere Möglichkeiten, eine solche Momentanreserve durch eine Windenergieanlage bereitzustellen. Bspw. kann eine Windenergieanlage auch zusätzlich auf einen elektrischen Energiespeicher zugreifen. Ein solcher könnte bspw. in Form einer elektrischen Batterie vorgesehen sein, wobei diese Batterie bspw. an einem Gleichspannungszwischenkreis des Wechselrichters angeschlossen sein kann. Für dieses Beispiel kann derselbe Wechselrichter, der auch die aus Wind erzeugte Leistung einspeist, außerdem elektrische Leistung aus dem Batteriespeicher einspeisen. Das Einspeisen der Momentanreserve oder eines Teils davon kann somit auf einfache Art und Weise durch denselben Wechselrichter erfolgen. Außerdem oder alternativ kann zur Bereitstellung der Momentanreserve oder eines Teils davon ein Kondensatormittel, besonders eine Kondensatorbank, vorgesehen sein. Es wurde erkannt, dass in den meisten Betriebsstunden durch eine Windenergieanlage bereitzustellende Momentanreserve vergleichsweise gering ist und dazu eine Kondensatorbank ausreichend Energie speichern kann. Vorzugsweise wird ein Kondensatormittel, besonders eine Kondensatorbank, mit einem Batteriespeicher kombiniert. Hierbei kann das Kondensatormittel schnell einen ersten Teil einer Stützleistung liefern und die Batterie bei Bedarf dazu genutzt werden, weitere Stützleistung zu liefern, wenn das noch nötig ist.

Insoweit kann durch das Bereitstellen einer Momentanreserve durch die wenigstens eine Windenergieanlage ein Beitrag zur Netzstützung geleistet werden, besonders dann, wenn sich viele Windenergieanlagen so verhalten. Bspw. könnte ein Windpark mit vielen Windenergieanlagen eine Momentanreserve in der Größenordnung bereitstellen, wie dies ein Großkraftwerk durch seinen großen rotierenden Synchrongenerator machen könnte.

Darüber hinaus wird nun aber vorgeschlagen, dass die Höhe der angebotenen Momentanreserve als Reservehöhe einstellbar ist. Die Reservehöhe ist also die Höhe der angebotenen Momentanreserve. Dadurch ist es möglich, gezielt das dynamische Verhalten des elektrischen Versorgungsnetzes bereits strukturell zu beeinflussen. Bspw. kommt es vor, dass Synchrongeneratoren von Großkraftwerken, die eine zusätzliche Leistung in das elektrische Versorgungsnetz einspeisen, zu einer Netzpendelung führen können. Eine Netzpendelung ist insoweit ein Phänomen, bei dem die Frequenz im elektrischen Versorgungsnetz schwankt, sich im ungünstigsten Fall sogar aufschwingen könnte.

Vereinfachend kann dies so erklärt werden, dass ein Synchrongenerator aufgrund des vorstehend beschriebenen Verhaltens zusätzliche Leistung in das elektrische Versorgungsnetz einspeist, oder auch seine Leistung reduziert, wenn ein Bedarf zu bestehen scheint. Dieser Bedarf wird dann gedeckt. Ggf. wird sogar etwas mehr Leistung als erforderlich eingespeist. Ein örtlich weit entfernter Synchrongenerator arbeitet dann ganz grundsätzlich ähnlich und erhöht auch seine Leistung. Entsprechend ist dann mehr Leistung im Netz und das wiederum führt zu einer reduziert eingespeisten Leistung. Wird nun wieder weniger Leistung eingespeist, kann wieder eine Situation eines Leistungsunterschusses entstehen. Entsprechend kann hier eine Schwingung entstehen.

Bei der vorgeschlagenen Lösung ist die angebotene Momentanreserve der Höhe nach einstellbar, es ist also die Reservehöhe einstellbar und das wird vorzugsweise geschickt so eingesetzt, dass mehrere solche Windenergieanlagen im Netz sich unterschiedlich verhalten. Besonders kann auch durch die unterschiedlich große Momentanreserve ein entsprechend unterschiedlich dynamisches Verhalten erreicht werden. Es kann auch jeweils eine Anpassung an die Eigenschaft des Teils des Versorgungsnetzes in der Nähe des betreffenden Netzanschlusspunktes erreicht werden.

Somit kann es möglich sein, durch das Einstellen der Momentanreserve sogar die Netzstruktur hinsichtlich ihres dynamischen Verhaltens zu verbessern. Mit anderen Worten kann durch eine entsprechende Einstellung vieler solcher Windenergieanlagen ein elektrisches Versorgungsnetz mit einem stabileren Verhalten erreicht werden.

Vorzugsweise werden unterschiedlich große Reservehöhen eingestellt, abhängig davon, ob sie zum zusätzlichen Einspeisen vorgesehen sind, oder zum Reduzieren der eingespeisten Leistung vorgesehen sind. Auch dadurch kann einer Netzpendelung entgegengewirkt werden.

Vorzugsweise wird die Reservehöhe in Abhängigkeit einer Eigenschaft des Netzanschlusspunktes eingestellt. Das betrifft besonders die Eigenschaften des Netzanschlusspunktes bezogen auf das elektrische Versorgungsnetz. Bspw. kann die Momentanreserve abhängig eines Kurzschlussstromverhältnisses an dem Netzanschlusspunkt eingestellt werden. Unter einem Kurzschlussstromverhältnis wird hierbei das Verhältnis der Kurzschlussleistung zur Anschlussleistung verstanden. Die Kurzschlussleistung ist diejenige Leistung, die das betreffende elektrische Versorgungsnetz an dem Netzanschlusspunkt bereitstellen kann, wenn dort ein Kurzschluss auftritt. Die Anschlussleistung ist die Anschlussleistung des angeschlossenen Einspeisers, also der Windenergieanlage bzw. des Windparks und damit der Summe aller Windenergieanlagen des Windparks zusammen. Vorzugsweise wird direkt die Kurzschlussleistung betrachtet und davon abhängig die Reservehöhe eingestellt. Auch dadurch kann das Stützverhalten gut an die Netzeigenschaft angepasst werden.

Es kommt aber bspw. auch in Betracht, zu berücksichtigen, wie nah der Netzanschlusspunkt an einem Kopplungspunkt ist, an dem eine Kopplung besonders mit einem anderen elektrischen Versorgungsnetz bzw. mit einem in dem Moment noch abgekoppelten Teil des Versorgungsnetzes ist.

Eine weitere Möglichkeit ist somit, eine ermittelte Netzimpedanz zu berücksichtigen und davon abhängig die Reservehöhe einzustellen. Außerdem oder alternativ wird vorgeschlagen, die Reservehöhe abhängig davon einzustellen ob eine Teilnetzbildung erkannt wurde, bei der sich ein Teilnetz gebildet hat. Besonders im Falle einer solchen Teilnetzbildung kann es vorteilhaft sein, eine große Momentanreserve anzubieten. Hier kommt auch in Betracht, die Momentanreserve überhaupt erst dann bereit zu stellen, wenn eine solche Teilnetzbildung erkannt wurde. Vorzugsweise wird bei einer erkannten Teilnetzbildung die Momentanreserve gegenüber einer nominalen Momentanreserve und/oder gegenüber einer zuvor eingestellten Momentanreserve um einen vorbestimmten Wert erhöht. Insbesondere wird sie dabei um wenigstens 10% als vorbestimmten Wert oder um einen absoluten Wert erhöht.

Gemäß einer Ausführungsform wird vorgeschlagen, dass eine Momentanreserve abhängig davon angeboten wird, ob die betreffende Windenergieanlage in dem Moment Leistung aus Wind erzeugt. Es kann auch vorzugsweise vorgesehen sein, dass die Reservehöhe in Abhängigkeit von einem Betriebszustand der Windenergieanlage eingestellt wird. Besonders kommt in Betracht, dass die Windenergieanlage bei schwachem Wind und entsprechend geringer erzeugter Leistung eine geringe Reservehöhe hat, also eine geringe Momentanreserve bereitstellt bzw. anbietet. Es kommt aber auch der umgekehrte Fall in Betracht, nämlich bei schwachem Wind eine hohe Momentanreserve bereitzustellen bzw. anzubieten, weil in manchen Fällen bei schwachem Wind eine deutlich höhere Wechselrichterkapazität zur Verfügung steht. Im Übrigen kann eine Windenergieanlage bspw. auch dann eine Momentreserve bereitstellen, wenn sie keine Leistung aus Wind erzeugt, aber bspw. über einen elektrischen Speicher wie einem Batteriespeicher verfügt, aus der eine Momentanreserve bereitgestellt werden könnte.

Vorzugsweise wird vorgeschlagen, dass das zusätzliche Einspeisen elektrischer Leistung bzw. das Reduzieren der eingespeisten Leistung über eine Einstellfunktion von einem Zustand des elektrischen Versorgungsnetzes abhängt und von der Reservehöhe abhängt. Es wird also eine doppelte Abhängigkeit vorgeschlagen. Bspw. kann die zusätzlich eingespeiste Leistung - gleiches gilt sinngemäß für das Verringern der eingespeisten Leistung, auch für die weiteren Beispiele - von einer Änderung der Netzfrequenz abhängen. Eine solche Änderung der Netzfrequenz kann auch über einen zeitlichen Frequenzgradienten df/dt angegeben werden. Vorzugsweise hängt die zusätzlich eingespeiste Leistung von diesem Frequenzgradienten ab und ist um so größer, je größer dieser Frequenzgradient ist. Die Reservehöhe beeinflusst nun zusätzlich diese Abhängigkeit. Die zusätzlich eingespeiste Leistung kann dann, um ein einfaches Beispiel zu nennen, proportional zum Frequenzgradienten und proportional zur Reservehöhe sein.

Eine Ausgestaltung schlägt vor, dass die Reservehöhe als Verstärkung der Einstellfunktion wirkt. Die Reservehöhe kann dann als Faktor eingehen. Für das Beispiel der Abhängigkeit von dem Frequenzgradienten df/dt kann das durch folgende Gleichung angegeben werden:

$$P_z = P_{z0} * df/dt * Res * K$$

In dieser Gleichung ist P, die zusätzlich eingespeiste Leistung, $P_{z0}$ ein Leistungsreferenzwert, df/dt der Frequenzgradient, Res die Reservehöhe und K ein Proportionalitätsfaktor oder Normierungsfaktor, der auch die physikalischen Einheiten der Gleichung anpassen kann. Der Leistungsreferenzwert und der Proportionalitätsfaktor können auch zusammengelegt werden.

Es kann somit erreicht werden, dass die Reservehöhe wie ein Verstärkungsfaktor wirkt, so dass auf gleiche df/dt unterschiedlich stark reagiert werden kann, je nachdem, welchen Wert die Reservehöhe hat, also je nachdem wie wieviel Momentanreserve bereitgestellt wird.

Gemäß einer Ausführungsform wird vorgeschlagen, dass an die wenigstens eine Windenergieanlage über eine Schnittstelle ein Vorgabewert zum Verändern der Reservehöhe eingegeben wird. Somit kann besonders von extern die Reservehöhe verändert werden. Das gibt besonders einem Netzbetreiber oder einer zentralen Steuereinheit oder einer Leitzentrale die Möglichkeit, die Reservehöhe einzustellen. Dadurch kann auch aktuellen Situationen im Netz oder zu erwartenden Situationen Rechnung getragen werden. Bspw. kann durch eine solche Änderung der Reservehöhe die Momentreserve auf ein Ereignis eingestellt werden, wie bspw. ein zu erwartendes Zuschalten oder Abschalten eines großen Verbrauchers, oder auch das Verbinden oder Trennen eines Netzabschnitts.

Die Schnittstelle kann kabelgebunden oder kabellos realisiert werden. Besonders kommt auch in Betracht, vorhandene Datenübertragungswege, besonders vorhandene Datenleitungen, für dieses Eingeben eines Vorgabewertes zu nutzen.

Außerdem oder alternativ wird gemäß einer Ausführungsform vorgeschlagen, dass die wenigstens eine Windenergieanlage ihre eingestellte Reservehöhe als Information bereitstellt. Dadurch können sich andere aktive Einheiten, besonders andere Einspeiseeinheiten daran orientieren. Besonders ist dadurch bekannt, welche Momentanreserven zur Verfügung stehen. Vorzugsweise werden diese Informationen anderen Windenergieanlagen und außerdem oder alternativ einer zentralen, mehrere Netzanschlusspunkte überwachenden Steuereinheit übergeben. Besonders eine solche zentrale, mehrere Netzanschlusspunkte überwachende Steuereinheit, die als Netzsteuereinrichtung ausgebildet sein kann, kann dadurch die Gesamtlage verfügbarer Momentreserven in dem elektrischen Versorgungsnetz oder dem betreffenden Teilabschnitt überblicken und ggf. Steuermaßnahmen einleiten.

Vorzugsweise wird eine Momentanreserve in Höhe der Reservehöhe bereitgestellt und das kann durch unterschiedliche Maßnahmen erfolgen, die auch kombiniert werden können. Eine dieser vorgeschlagenen Maßnahmen ist das Vorsehen eines Drehzahlbereichs zum Betreiben der Windenergieanlage mit einer Drehzahl in diesem Bereich. Die Drehzahl betrifft hierbei grundsätzlich die Drehzahl des Rotors der Windenergieanlage. Im Falle einer getriebelosen Windenergieanlage ist diese mit der Drehzahl des Generators identisch.

Der Drehzahlbereich und die konkrete Drehzahl werden so gewählt, dass eine Absenkung der Drehzahl bis zu einem unteren Wert des Drehzahlbereichs die Momentanreserve in Höhe der Reservehöhe aus Rotationsenergie bereitstellen kann. Zunächst geht es darum, die Möglichkeit dieser Bereitstellung zu schaffen, unabhängig davon, ob diese Momentanreserve dann auch ganz oder teilweise abgerufen wird. Die vorgeschlagene Vorgabe eines Drehzahlbereichs, was auch als Drehzahlband bezeichnet werden kann, macht sich besonders auch die Erkenntnis zu Nutze, dass eine Windenergieanlage vorzugsweise zwar mit einer optimalen Drehzahl betrieben wird, dass diese Drehzahl aber in einem vorgegebenen Bereich, der hier nämlich als Drehzahlbereich eingestellt wird, verändert werden kann, ohne dass sich die Leistungserzeugung signifikant verschlechtert. Dabei ist zu beachten, dass selten, z.B. weniger als einmal pro Jahr, eine volle Reserveleistung überhaupt abgerufen wird.

Es kommt hinzu, dass eine höhere Momentanreserve auch eine höhere Verstärkung der Stützmaßnahme erreichen kann. Es kann dann also generell eine höhere Stützleistung eingespeist werden. Betrachtet man das Verhalten eines konventionellen Großkraftwerkes und geht von einem direkt gekoppelten Synchrongenerator aus, so kann dieser bspw. in einem erlaubten Frequenzband der Netzfrequenz von +-2%, (z.B. 50Hz +- 1Hz) wegen seiner direkten Kopplung auch nur mit +- 2% Drehzahländerung Stützleistung bereitstellen. Durch die direkte Kopplung zwischen Frequenz und Drehzahl ist dieser Zusammenhang fest.

Auch bei dem vorgeschlagenen Verfahren kann ein Drehzahlbereich einem erlaubten Frequenzband gedanklich zugeordnet werden. Auch hier kann bspw. einem erlaubten Frequenzband von $f_N$ +- 2% ein Drehzahlbereich von $n_N$ +-2% zugeordnet werden. Wird nun aber die Reservehöhe erhöht und über eine Erhöhung des Drehzahlbereichs bereitgestellt, kann damit auch dem erlaubten Frequenzband, das sich grundsätzlich nicht ändert, ein höherer Drehzahlbereich zugeordnet werden. Dem exemplarisch genannten Frequenzband von $f_N$ +- 2% könnte dann bspw. ein Drehzahlbereich von $n_N$ +- 10% zugeordnet werden, wenn sich die Reservehöhe entsprechend erhöht hat. Das zeigt, dass nun die Verwendung von Stützleistung aus der Rotationsenergie des rotierenden Generators steuerbar ist. Auch das ist ein Vorteil des vorgeschlagenen Verfahrens.

Es ist aber außerdem möglich, bspw. nur ein schmaleres Frequenzband zu regeln. Der Drehzahlbereich könnte dann diesem schmaleren Frequenzband zugeordnet werden. Um an das obige Beispiel anzuknüpfen, könnte dann bspw. der Drehzahlbereich von $n_N$ +- 10% einem Frequenzband von $f_N$ +- 1% zugeordnet werden. Die proportionale Stützleistung hätte sich dadurch verdoppelt. Das entspricht einer Erhöhung der Verstärkung. Mit der oben genannten Formel $P_Z = P_{Z0} * df/dt * Res * K$ könnte das durch eine entsprechende Erhöhung, hier also Verdoppelung, des Proportionalitätsfaktors erreicht werden.

Insoweit darf der Drehzahlbereich nicht zu groß vorgegeben werden, weil sich dann doch an seinem Rand eine hohe Leistungsverschlechterung ergeben könnte. Es ist zu beachten, dass es sehr selten vorkommt, dass eine so starke Abweichung auftritt. Dabei ist hier abzuwägen zwischen der Notwendigkeit eine hohe Momentanreserve bereitzustellen einerseits und die Windenergieanlage möglichst in ihren optimalen Arbeitspunkt zum Betreiben andererseits. Insbesondere kann die Drehzahl so gewählt werden, dass sie ihren optimalen Wert annimmt. Um diesen optimalen Wert wird dann der Drehzahlbereich gelegt, bspw. symmetrisch so, dass der Rand dieses Drehzahlbereichs jeweils um 10 Prozent über unter dieser optimalen Drehzahl liegt. Wird nun die Drehzahl, im genannten Beispiel also von der optimalen Drehzahl auf den unteren Bereich dieses Drehzahlbereichs verringert, in dem genannten Beispiel also um 10 Prozent verringert, so wird dabei Rotationsenergie abgegeben. Dieses lässt sich berechnen und bildet die hierdurch bereitstellbare Momentanreserve. Eine so große Änderung kommt aber nur sehr selten vor. Dem könnte in einem 50Hz-Netz ein Frequenzeinbruch auf 47,5 Hz oder 51,5 Hz entsprechen, was seltener als jährlich zu erwarten ist.

Der obere Wert des Drehzahlbereichs, also die Obergrenze des gewählten Drehzahlbereichs, kann genutzt werden, um die Einspeisung der Leistung in das Netz zu reduzieren, also besonders zur Netzstützung durch Leistungsverringerung, wenn zu viel Leistung im Netz vorhanden ist.

Jedenfalls hat diese Variante der Vorgabe eines Drehzahlbereichs den Vorteil, dass die Windenergieanlage weiter in ihrem optimalen Arbeitspunkt, also insbesondere mit optimaler Drehzahl weiterbetrieben werden kann. Erst, wenn tatsächlich der Fall eintritt, dass die Momentanreserve abgerufen wird bzw. bereitgestellt werden muss, wird die genannte Drehzahlreduzierung durchgeführt. Die Vorgabe der Momentanreserve schafft dabei einerseits einen kalkulierbaren Wert für die Netzstützung des elektrischen Versorgungsnetzes, mit dem bspw. der Betreiber des elektrischen Versorgungsnetzes kalkulieren kann. Außerdem schafft diese vorgegebene Momentanreserve aber auch Gewissheit darüber, in welchem Arbeitspunkt die Windenergieanlage durch Abgabe dieser Momentanreserve verändert wird. Es ist also vorher bekannt und kann abgeschätzt werden, wie weit sich der Arbeitspunkt verschlechtert und insbesondere, dass aber die Windenergieanlage mit einem solchen Arbeitspunkt weiter arbeiten kann.

Gemäß einer weiteren, ganz ähnlichen Ausführungsform wird vorgeschlagen, dass eine untere Drehzahl und eine um eine Differenzdrehzahl zu der unteren Drehzahl erhöhte obere Drehzahl vorgesehen wird. Die Windenergieanlage wird dann bei der oberen Drehzahl betrieben. Es wird also die Drehzahl bewusst erhöht, um dadurch eine höhere Rotationsenergie als Momentanreserve bereitstellen zu können.

Die Differenzdrehzahl wird hierbei so gewählt, dass ein Absenken der oberen Drehzahl auf die untere Drehzahl eine Rotationsenergie als Momentanreserve in Höhe der Reservehöhe abgibt. Auch werden entsprechende Drehzahlen vorgesehen, die ein gezieltes Absenken der Drehzahl zur Freigabe von Rotationsenergie ermöglichen. Hier wird besonders auch vorgeschlagen, die Windenergieanlage mit einer höheren Drehzahl als der optimalen Drehzahl zu betreiben.

Außerdem oder alternativ wird vorgeschlagen, einen Arbeitspunkt der wenigstens einen Windenergieanlage entsprechend zu verändern. Auch dies kann eine Veränderung der Drehzahl betreffen. Es kommen aber auch andere Möglichkeiten in Betracht, wie bspw. im Teillastbereich, andere Blattwinkel einzustellen. Das kann dabei mit einer veränderten Drehzahl kombiniert werden, in dem also die Drehzahl und die Blattwinkel verändert werden.

Außerdem oder alternativ wird vorgeschlagen, einen elektrischen Energiespeicher mit darin in Höhe der Reservehöhe gespeicherter und abrufbarer Speicherenergie vorzusehen. Es wird also zunächst ein Energiespeicher vorgeschlagen, der bspw. ein Batteriespeicher sein kann. Er kann aber auch andere Speichermedien aufweisen, wie bspw. einen Gasspeicher oder einen separaten Schwungradspeicher, die bei Bedarf ihre gespeicherte Energie in elektrische Energie umwandeln. Durch das Vorsehen eines solchen elektrischen Energiespeichers kann erreicht werden, dass die Windenergieanlage entsprechend dieses Energiespeichers zusätzliche Leistung und damit zusätzliche Momentanreserve bereitstellen kann.

Es kommt auch in Betracht, dass die Windenergieanlage als solche grundsätzlich weiter in ihrem optimalen Arbeitspunkt betrieben wird und nur der genannte elektrische Energiespeicher entsprechende Momentanreserve bereitstellt. Auch dies kann situationsbedingt verändert werden. Bspw. wird vorgeschlagen, bei Vorgabe bzw. beim Anbieten einer vergleichsweise geringen Momentanreserve hierfür nur den elektrischen Speicher vorzusehen und erst bei dem Anbieten einer hohen Momentanreserve noch oben beschriebene Rotationsenergie des Rotors der Windenergieanlage zusätzlich bereitzustellen. Im Übrigen geht diese Ausführungsform bei Energiespeichern von der abrufbaren Speicherenergie aus. Dies kann bspw. Batteriespeicher betreffen, die nur bis zu einem gewissen Entladeniveau entladen werden, ab dem eine Beschädigung auftreten könnte. Dann wäre immer noch Energie gespeichert, die aber nicht mehr als abrufbar bezeichnet werden kann.

Gemäß einer weiteren Ausführungsform wird vorgeschlagen, dass im elektrischen Versorgungsnetz eine Netzpendelung erfasst wird, die eine schwingende Frequenz im elektrischen Versorgungsnetz beschreibt, und dass die Reservehöhe in Abhängigkeit dieser erfassten Netzpendelung eingestellt wird. Wird also erfasst, dass sich die Frequenz oszillierend erhöht und wieder verringert, so kann dies zum Anlass genommen werden, die jeweils angebotene Momentanreserve zu ändern. Dadurch kann die Eigenschaft zur Netzstützung der betreffenden Windenergieanlage verändert werden und damit auch die Eigendynamik des elektrischen Versorgungsnetzes verändert werden. Das geht besonders dann, wenn sehr viele Windenergieanlagen eine entsprechende Maßnahme ergreifen.

Grundsätzlich sind die Ausführungsformen kombinierbar. Hier wird besonders darauf hingewiesen, dass auch die Veränderung der Reservehöhe in Abhängigkeit der erfassten Netzpendelung vorteilhaft kombiniert werden kann mit dem Vorschlag, dass die Reservehöhe in Abhängigkeit einer Eigenschaft des Netzanschlusspunktes eingestellt wird. So wird besonders vorgeschlagen, dass beim Erfassen einer Netzpendelung, die für das gesamte elektrische Versorgungsnetz oder zumindest einen mehrere Netzanschlusspunkte umfassenden Netzabschnitt relevant ist, die Reservehöhen der einzelnen Netzanschlusspunkte unterschiedlich eingestellt bzw. verändert werden.

Vorzugsweise wird die Reservehöhe in Abhängigkeit einer Kopplungsstärke des Netzanschlusspunktes eingestellt. Eine solche Kopplungsstärke ist ein Maß dafür, wie stark der Netzanschlusspunkt mit dem elektrischen Versorgungsnetz gekoppelt ist. Dies betrifft besonders die Frage, inwieweit sich Änderungen im elektrischen Versorgungsnetz, besonders Spannungsänderungen und/oder Änderungen der Leistungsbilanz auf den betreffenden Netzanschlusspunkt auswirken. Je weniger sich das auswirkt, umso geringer ist die Kopplungsstärke. Vorzugsweise wird die Momentanreserve umso kleiner eingestellt, umso geringer die Kopplungsstärke ist.

Gemäß einer Ausgestaltung wird vorgeschlagen, dass zur Netzstützung zusätzlich zur erzeugten Leistung, Energie bis zur Höhe der Reservehöhe in das elektrische Versorgungsnetz eingespeist wird. Dies erfolgt vorzugsweise in Abhängigkeit einer Netzspannungsänderung des elektrischen Versorgungsnetzes. Besonders bei einem Absinken der Netzspannung unter die Nennspannung wird vorgeschlagen, Leistung zur Stützung einzuspeisen. Ein zusätzliches Einspeisen elektrischer Leistung oder Reduzieren der eingespeisten Leistung bis zur angebotenen Momentanreserve kann auch in Abhängigkeit der Netzfrequenz erfolgen, die ein Indikator für eine Leistungsbilanz sein kann.

Außerdem oder alternativ wird vorgeschlagen, die zusätzliche Leistung in Abhängigkeit einer Netzfrequenzänderung des elektrischen Versorgungsnetzes einzuspeisen. Es wird somit nicht oder nicht nur die absolute Frequenz des elektrischen Versorgungsnetzes betrachtet, sondern ihre Änderung. Besonders kann ein Frequenzgradient df/dt betrachtet werden und es wird vorgeschlagen, um so mehr Leistung zum Stützen in das elektrische Versorgungsnetz einzuspeisen bzw. um so stärker die eingespeiste Leistung zu reduzieren, je größer der Betrag des Frequenzgradienten ist.

Außerdem oder alternativ wird vorgeschlagen, die zusätzliche Energie in Abhängigkeit einer Leistungsdifferenz zwischen erzeugter und verbrauchter Leistung im elektrischen Versorgungsnetz einzuspeisen. Besonders dann, wenn mehr Leistung verbraucht als durch Erzeugungseinheiten eingespeist wird, kann solche zusätzliche Energie zum Ausgleich und damit zur Stützung eingespeist werden.

Außerdem oder alternativ wird vorgeschlagen, die zusätzliche Energie in Abhängigkeit einer von extern übermittelter Anforderung einzuspeisen. Das kann insbesondere in Abhängigkeit einer Anforderung durch den Betreiber des elektrischen Versorgungsnetzes erfolgen. Dadurch kann der Betreiber des elektrischen Versorgungsnetzes, also der Netzbetreiber, solche Windenergieanlagen als Steuerungsmittel einsetzen. Besonders ist auch hier eine Kombination vorteilhaft, wenn der Netzbetreiber, oder eine andere zentrale Steuereinheit, sowohl die Reservehöhe einstellen kann, als auch vorgeben kann, wenn eine solche durch die Reservehöhe eingegebene Momentanreserve tatsächlich auch eingespeist wird. Bspw. kann für eine Frequenzsynchronisation in einem Teilnetzwerk vorgesehen sein, kurzzeitig eine höhere Leistung einzuspeisen.

Gemäß einer weiteren Ausführungsform wird vorgeschlagen, dass zur Netzstützung das zusätzliche Einspeisen elektrischer Leistung bzw. das Reduzieren der eingespeisten Leistung unter Entnahme bzw. Einspeicherung von Speicherenergie wenigstens eines Kondensatormittels, Rotationsenergie der wenigstens einen Windenergieanlage und Speicherenergie wenigstens eines Batteriespeichers vorgenommen wird, wobei abhängig von der zu entnehmenden bzw. einzuspeichernden Energiemenge zuerst Speicherenergie aus dem Kondensatormittel entnommen bzw. eingespeichert wird, dann Rotationsenergie aus der wenigstens einen Windenergieanlage verwendet wird, wenn noch weitere Energie benötigt wird und dann Speicherenergie aus dem Batteriespeicher verwendet wird, wenn dann immer noch weitere Energie benötigt wird. Das Verwenden der Rotationsenergie betrifft besonders Rotationsenergie des aerodynamischen Rotors der Windenergieanlage. Es wird hier also vorgeschlagen, Rotationsenergie aus dem aerodynamischen Rotor zu verwenden bzw. Energie als Rotationsenergie in dem aerodynamischen Rotor einzuspeichern.

Dadurch wird zunächst erreicht, dass durch die Verwendung mehrerer Energiequellen bzw. Energiesenken ein großes Volumen an Regelenergie geschaffen wird. Die gezielte Reihenfolge, zunächst das Kondensatormittel, dann den Rotor und schließlich den Batteriespeicher zu verwenden, nutzt diese unterschiedlichen Speichermedien geschickt aus. Oftmals kann die Speicherenergie des Kondensatormittels als Momentanreserve ausreichen und von dem Kondensatormittel schnell und ohne Memory-Effekt bereitgestellt werden.

Wird noch mehr Energie benötigt, wird der aerodynamische Rotor verwendet. Dabei wurde erkannt, dass auch dieser ohne Memory-Effekt arbeitet und dass es vorteilhaft sein kann, von dem Kondensator zu dem aerodynamischen Rotor als Energiequelle überzugehen. Erst wenn auch das nicht reicht, wird der Batteriespeicher verwendet.

Außerdem wird ein Verfahren zum Einspeisen elektrischer Leistung an mehreren Netzanschlusspunkten in ein elektrisches Versorgungsnetz mittels jeweils wenigstens einer Windenergieanlage vorgeschlagen, bei dem zum Einspeisen an jedem der Netzanschlusspunkte jeweils ein Verfahren gemäß wenigstens einer vorstehend beschriebenen Ausführungsformen verwendet wird und die Reservehöhe für jeden der Netzanschlusspunkte unterschiedlich einstellbar ist.

Dadurch kann besonders eine gezielte und koordinierte Veränderung bzw. Einstellung der Dynamik des elektrischen Versorgungsnetzes oder zumindest des betroffenen Abschnitts des elektrischen Versorgungsnetzes vorgenommen werden. Vorzugsweise wird dies über eine zentrale Steuereinheit, besonders eine Netzsteuereinrichtung durchgeführt und außerdem oder alternativ wird vorgeschlagen, eine solche zentrale Einstellmöglichkeit für einen Netzbetreiber zu schaffen.

Vorzugsweise wird für mehrere Netzanschlusspunkte zusammen eine insgesamt angebotene Momentanreserve der Höhe nach vorgegeben. Davon abhängig wird dann für jeden dieser Netzanschlusspunkte eine Reservehöhe bestimmt, insbesondere so, dass die Summe dieser Reservehöhen der Höhe der insgesamt angebotenen Momentanreserve entspricht. Hierdurch kann durch das koordinierte Einstellen der Reservehöhe mehrerer, insbesondere vieler Netzanschlusspunkte bzw. der Windenergieanlagen vieler Netzanschlusspunkt auch eine insgesamt signifikant große Momentanreserve vorgesehen werden. Insoweit kann in einem ersten Schritt eine insgesamt nötige oder zumindest wünschenswerte Momentanreserve vorgegeben werden. In einem zweiten Schritt kann dann außerdem für eine Beeinflussung der Dynamik des elektrischen Versorgungsnetzes eine entsprechende Verteilung der Momentanreserven vorgesehen sein. Damit ist zum einen eine Netzstützung in absoluter Höhe erzielbar und zum anderen bspw. das Schwingverhalten des elektrischen Versorgungsnetzes bzw. des betreffenden Netzabschnitts beeinflussbar.

Außerdem wird eine Windenergieanlage zum Einspeisen elektrischer Leistung an einem Netzanschlusspunkt in ein elektrisches Versorgungsnetz vorgeschlagen. Eine solche Windenergieanlage umfasst einen aerodynamischen Rotor und einen Generator zum Erzeugen elektrischer Leistung aus Wind, eine Einspeiseeinheit zum Einspeisen der erzeugten Leistung oder eines Teils davon in das elektrische Versorgungsnetz, eine Steuereinheit zu Anbieten einer Momentanreserve zum Einspeisen in das elektrische Versorgungsnetz zur Stützung des elektrischen Versorgungsnetzes, ein Steuermittel zum Steuern der Windenergieanlage so, dass die angebotene Momentanreserve oder ein Teils davon, in Abhängigkeit einer Netzeigenschaft und/oder einer externen Anforderung in das elektrische Versorgungsnetz eingespeist wird, um das elektrische Versorgungsnetz zu stützen, und sie umfasst ein Einstellmittel zum Einstellen der Höhe der angebotenen Momentanreserve als Reservehöhe (Angebotshöhe).

Somit wird mit der Windenergieanlage mit dem aerodynamischen Rotor Wind in eine Drehbewegung umgewandelt und mit dem Generator elektrische Leistung dadurch aus dem Wind erzeugt. Diese elektrische Leistung, ggf. reduziert um Verluste oder andere Leistungsabgänge, wird mittels einer Einspeiseeinheit in das elektrische Versorgungsnetz eingespeist. Die Einspeiseeinheit kann besonders als Wechselrichter ausgebildet sein.

Über eine Steuereinheit wird eine Momentanreserve angeboten, um damit das elektrische Versorgungsnetz zu stützen, wenn diese Momentanreserve oder ein Teil davon eingespeist wird. Das Steuermittel steuert die Windenergieanlage so, dass angebotene Momentanreserve oder ein Teil davon in Abhängigkeit einer Netzeigenschaft und außerdem oder alternativ in Abhängigkeit einer externen Anforderung in das elektrische Versorgungsnetz eingespeist wird, um das gewünschte Stützten des elektrischen Versorgungsnetzes zu erreichen.

Schließlich ist ein Einstellmittel vorgesehen, das die Reservehöhe einstellt. Das Einstellmittel stellt also die Höhe der angebotenen Momentanreserve ein. Das Einstellmittel, gleiches gilt für die Steuereinheit, kann als Zusatzelement oder als Teil einer in einer solchen Windenergieanlage ohnehin vorhandenen Steuereinheit vorgesehen sein.

Insbesondere wird vorgeschlagen, dass die Windenergieanlage dazu vorbereitet ist, ein Verfahren gemäß wenigstens einer der vorstehend beschriebenen Ausführungsformen auszuführen. Besonders wird vorgeschlagen, dass die Windenergieanlage dazu eine Steuereinrichtung aufweist. Diese Steuereinrichtung kann die Steuereinheit zum Anbieten der Momentanreserve und außerdem oder alternativ das Einstellmittel zum Einstellen der Höhe der angebotenen Momentanreserve umfassen, oder die Steuereinheit und/oder das Einstellmittel sind als separate Elemente vorgesehen. Die Steuereinrichtung kann bspw. auch eine Schnittstelle zum Datenaustausch ansteuern, sowohl zum Empfang als auch zum Versenden von Informationen.

Vorzugsweise weist die Windenergieanlage wenigstens einen elektrischen Energiespeicher zum Bereitstellen der Momentanreserve oder eines Teils davon auf. Die Momentanreserve in Höhe der Reservehöhe kann somit durch diesen wenigstens einen elektrischen Energiespeicher bereitgestellt werden, oder die Bereitstellung erfolgt durch diesen elektrischen Energiespeicher und ergänzt durch Rotationsenergie des Rotors der Windenergieanlage.

Außerdem wird ein Windpark mit mehreren Windenergieanlagen vorgeschlagen, wobei eine, mehrere oder alle der Windenergieanlagen solche sind, wie gemäß wenigstens einer vorstehenden Ausführungsform beschrieben wurden. Außerdem oder alternativ ist der Windpark dazu vorbereitet, zumindest ein Verfahren gemäß wenigstens einer vorstehend beschriebenen Ausführungsform auszuführen. Insbesondere kann der Windpark dazu eine Steuereinrichtung aufweisen, die die entsprechenden Verfahrensschritte durchführt oder zumindest koordiniert.

Außerdem wird eine Netzsteuereinrichtung zum Steuern mehrerer Einspeiseeinrichtungen zum Einspeisen elektrischer Leistung in ein elektrisches Versorgungsnetz vorgeschlagen. Jede dieser Einspeiseeinrichtungen umfasst wenigstens eine Windenergieanlage zum Erzeugen elektrischer Leistung aus Wind. Die Einspeiseeinrichtung kann dabei auch jeweils einen Windpark umfassen bzw. ein Windpark sein.

Außerdem weist jede Einspeiseeinrichtung eine Einspeiseeinheit auf zum Einspeisen der elektrischen Leistung oder eines Teils davon jeweils über einen Netzanschlusspunkt in das elektrische Versorgungsnetz. Es ist also für jede Einspeiseeinrichtung ein Netzanschlusspunkt vorgesehen. Der Netzanschlusspunkt kann auch als Teil der Einspeiseeinrichtung angesehen werde.

Jede Einspeiseeinrichtung weist auch eine Steuereinheit zum Anbieten einer Momentanreserve an, um diese zum Einspeisen in das elektrische Versorgungsnetz zur Stützung des elektrischen Versorgungsnetzes bei Bedarf bereitzustellen. Ferner weist diese Einspeiseeinrichtung ein Einstellmittel zum Einstellen der Höhe der angebotenen Momentanreserve als Reservehöhe auf.

Die Netzsteuereinrichtung umfasst dazu ein Datenübertragungsmittel zum Austausch von Daten zwischen der Netzsteuereinrichtung und den Einspeiseeinrichtungen. Ein solches Datenübertragungsmittel kann eine Funkverbindung, eine kabelgebundene Verbindung oder eine Kombination daraus sein. Es können auch vorhandene Telekommunikationseinrichtungen mit verwendet werden.

Außerdem weist die Netzsteuereinrichtung ein Vorgabemittel auf zum Vorgeben jeweils unterschiedlicher Reservehöhen an die Einspeiseeinrichtungen, damit die Einspeiseeinrichtungen darauf basierend die Höhe der angebotenen Momentanreserve einstellen. Somit kann durch diese Netzsteuereinrichtung zentral eine Steuerung oder zumindest Koordination der betroffenen Einspeiseeinrichtungen hinsichtlich ihrer angebotenen Momentanreserve vorgenommen werden. Die Netzsteuereinrichtung koordiniert somit, wieviel Momentanreserve jede der Einspeiseeinheiten anbietet und dann ggf. auch einspeist.

Vorzugsweise sind die Einspeiseeinrichtungen jeweils als Windpark ausgebildet, besonders so, wie vorstehend gemäß wenigstens einer Ausführungsform eines Windparks beschrieben wurde. Außerdem oder alternativ weist jede Einspeiseeinrichtung wenigstens eine Windenergieanlage gemäß einer der vorstehend beschriebenen Ausführungsformen auf. Somit können durch diese Netzsteuereinrichtung entsprechend mehrere über unterschiedliche Netzanschlusspunkte einspeisende Windenergieanlagen oder Windparks koordiniert werden.

Vorzugsweise weist die Netzsteuereinrichtung wenigstens einen Messaufnehmer auf zum Aufnehmen von Netzzuständen des elektrischen Versorgungsnetzes und hiermit können insbesondere Spannungshöhen des elektrischen Versorgungsnetzes als auch die Frequenz des elektrischen Versorgungsnetzes aufgenommen werden. Davon abhängig kann dann über eine Evaluierungsvorrichtung die Reservehöhe in Abhängigkeit wenigstens eines der aufgenommenen Netzzustände bestimmte werden. Bspw. kann die Evaluierungsvorrichtung beim Feststellen einer Netzpendelung, was eine weitere Möglichkeit eines Netzzustandes ist, entsprechend für die unterschiedlichen Einspeiseeinrichtungen unterschiedliche Reservehöhen vorsehen.

Vorzugsweise ist die Netzsteuereinrichtung dazu vorbereitet, ein Verfahren zum Einspeisen elektrischer Leistung an mehreren Netzanschlusspunkten gemäß einer vorstehend beschriebenen Ausführungsform auszuführen oder zu koordinieren. Insbesondere ist die Einspeisevorrichtung auch dazu vorbereitet, eine als notwendig erkannte oder von extern vorgegebene Gesamtmomentanreserve auf die einzelnen Einspeiseeinrichtungen zu verteilen.

Nachfolgend wird die Erfindung anhand von Ausführungsformen unter Bezugnahme auf die begleitenden Figuren beispielhaft näher erläutert.

Fig. 1    zeigt eine Windenergieanlage in einer perspektivischen Darstellung.

Fig. 2    zeigt einen Windpark in einer schematischen Darstellung.

Fig. 3    zeigt schematisch eine mögliche Netzstruktur zur Veranschaulichung zentraler und dezentraler Bereiche.

Fig. 4    veranschaulicht unterschiedliche Drehzahlkennlinien.

Fig. 5    veranschaulicht Zusammenhänge zwischen Drehzahl und Leistung.

Fig. 6    veranschaulicht einen Netzabschnitt eines elektrischen Versorgungsnetzes.

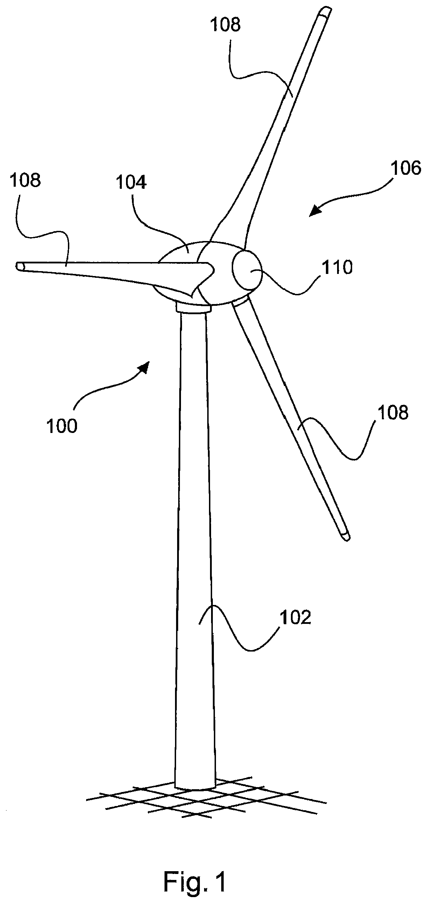

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

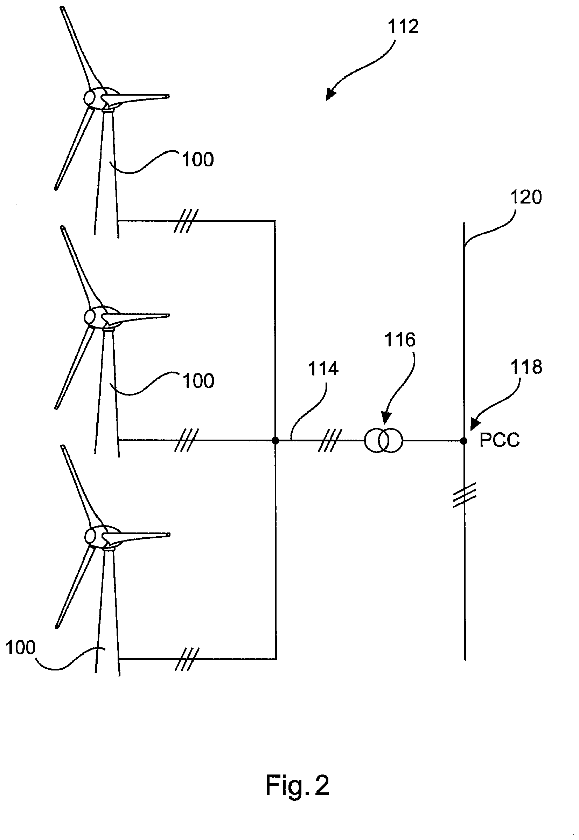

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

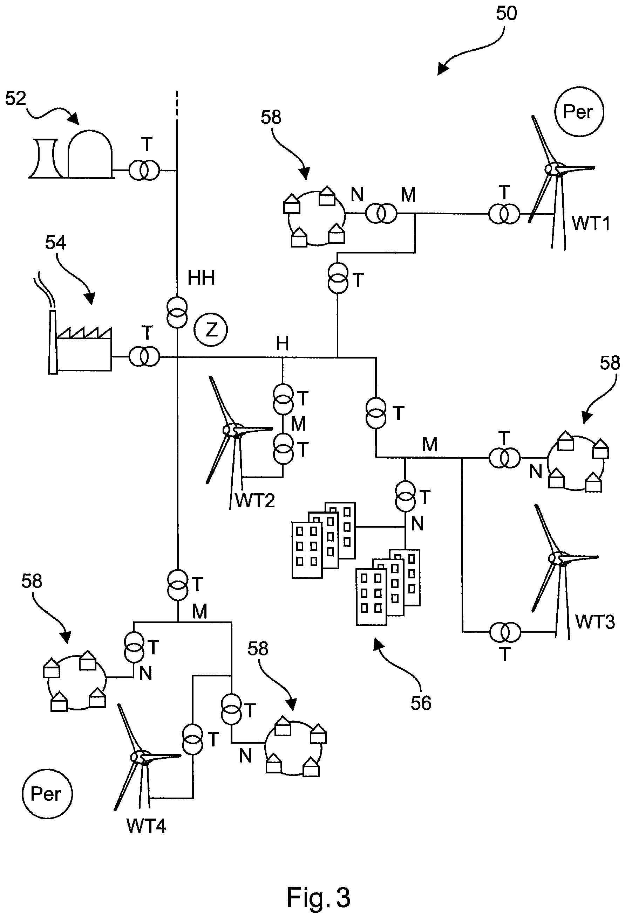

Fig. 3 zeigt ein elektrisches Versorgungsnetz 50 bzw. einen Teil davon in einer schematischen Darstellung. Dieses elektrische Versorgungsnetz 50 zeigt beispielhaft ein Großkraftwerk 52, einen industriellen Verbraucher 54 wie beispielsweise ein Stahlwerk oder eine andere Produktionsstätte sowie eine Stadt 56. Außerdem sind diverse kleinere Ortschaften 58 und vier Windenergieanlagen WT1 bis WT4 eingezeichnet. Das Netz weist verschiedene Netzabschnitte unterschiedlicher Spannung auf, nämlich ein Höchstspannungsnetz HH, ein Hochspannungsnetz H, mehrere Mittelspannungsnetze M und mehrere Niederspannungsnetze N. Zwischen diesen unterschiedlichen Netzen und zu dem Großkraftwerk 52, dem industriellen Verbraucher 54 und den Windenergieanlagen WT1 bis WT4 sind jeweils Transformatoren T angeordnet. Sowohl die Transformatoren T als auch die Ortschaften 58 werden in ihren Bezugszeichen nicht unterschieden, obwohl sie natürlich im Konkreten jeweils unterschiedlich ausgestaltet sind. Die Windenergieanlagen bzw. Windturbinen WT1 bis WT4 können auch repräsentativ jeweils für einen Windpark stehen, der jeweils mehrere Windenergieanlagen umfasst. Der jeweilige Transformator T einer der Windenergieanlagen WT1 bis WT4 kann auch zum Verständnis der hier erläuterten Lehre als Netzanschlusspunkt angesehen werden.

In diesem elektrischen Versorgungsnetz 50 stellt das Großkraftwerk 52 einen hinsichtlich der gelieferten Energiemenge großen Erzeuger dar. Der industrielle Verbraucher 54 stellt in diesem Sinne einen großen Verbraucher dar. Die Stadt 56 bildet ebenfalls einen vergleichsweise großen Verbraucher, und die Ortschaften 58 bilden jeweils eher kleinere Verbraucher. Die Windturbinen WT1 bis WT4 können jedenfalls im Vergleich zum Großkraftwerk 52 als kleinere Energieerzeugungseinheiten angesehen werden. Es ist aber zu beachten, dass die Windturbinen WT1 bis WT4, hier auch jeweils repräsentativ für einen Windpark stehen können. In diesem Fall können sie, als die Windparks, einen signifikanten Beitrag zur Energieerzeugung leisten. Noch größer ist aber ihr Anteil an vorhandener, zumindest potentieller, Rotationsenergie. Das wurde hier erkannt und es werden Vorschläge gemacht, diese Rotationsenergie vorteilhaft zu verwenden.

In einem Normalbetrieb, insbesondere dann, wenn auch der industrielle Verbraucher 54 betrieben wird und das Großkraftwerk 52 betrieben wird, wird es einen signifikanten Energiefluss von dem Großkraftwerk 52 zum industriellen Verbraucher 54 und einen signifikanten Energiefluss von dem Großkraftwerk 52 zur Stadt 56 geben. Wenn der industrielle Verbraucher 54 seine Leistungsabnahme verändert, besonders wenn er vom Netz geht oder zum Netz zugeschaltet wird, wird dies besonders stark an der Windturbine WT2 Auswirkungen haben. Gleiches gilt für Änderungen des Großkraftwerkes 52, besonders, wenn dieses vom Netz gehen sollte. Der Netzanschlusspunkt der Windturbine WT2 ist somit besonders stark mit dem elektrischen Versorgungsnetz 50 gekoppelt.

Häufig ist eine Kopplung im Zentrum oder einem Subzentrum eines elektrischen Versorgungsnetzes stärker als an einer Peripherie. Ein Zentrum ist hier anschaulich als "Z" eingezeichnet. Als zwei Peripherien sind zwei Bereiche mit "Per" gekennzeichnet. Diese Kennzeichnung eines Zentrums und einer Peripherie ist allerdings anschaulich zu verstehen. Tatsächlich ist an der Höchstspannungsleitung HH in der Nähe des Großkraftwerks 52 durch Pünktchen angedeutet, dass das elektrische Versorgungsnetz dort noch fortgesetzt wird und sich somit auch weitere Zentren bzw. Subzentren noch ergeben können.

Die Stärke der Kopplung muss aber nicht oder nicht ausschließlich von der Nähe zu einem Zentrum abhängen. Es spielen auch andere Kriterien eine Rolle, wie bspw. auch Eigenschaften der Übertragungsleitungen. Die Kopplungsstärke kann sich situationsabhängig und/oder zeitabhängig ändern. Sie kann z.B. tagsüber anders sein, als nachts. An diesem Beispiel soll besonders eine unterschiedlich starke Kopplung der einzelnen Netzanschlusspunkte veranschaulicht werden.

Der Netzanschlusspunkt der Windturbine WT2 ist demnach sehr stark mit dem elektrischen Versorgungsnetz gekoppelt. Die Windturbine WT1 steht eher etwas abseits und ihr Netzanschlusspunkt dürfte daher schwächer mit dem elektrischen Versorgungsnetz gekoppelt sein. Starke Leistungsschwankungen am industriellen Verbraucher 54 könnten weniger Auswirkung auf die Windturbine WT1 bzw. ihren Netzanschlusspunkt haben, als auf die Windturbine WT2.

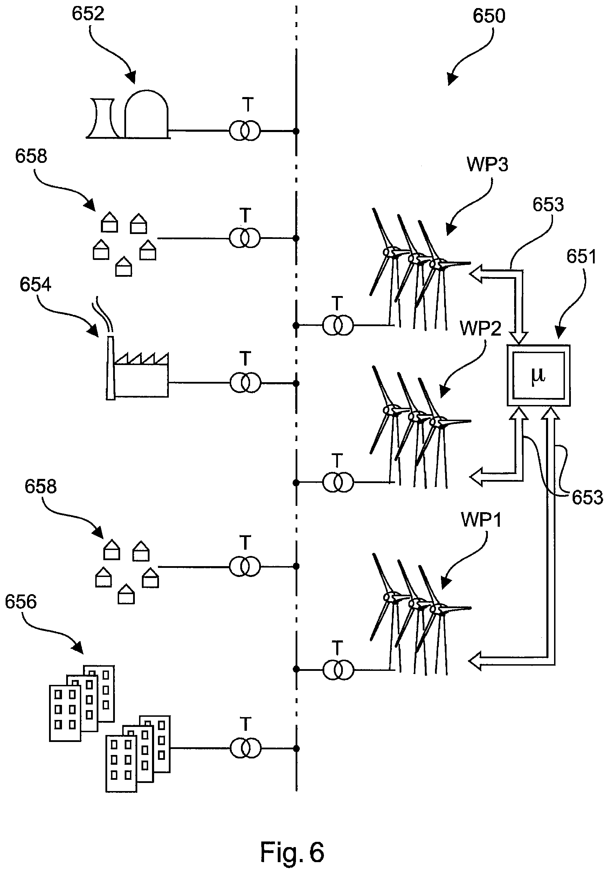

Die weiteren Windturbinen WT3 und WT4 der Fig. 6 liegen, was die Stärke der Kopplung ihrer Netzanschlusspunkte betrifft, zwischen diesen beiden Windturbinen WT1 und WT2. Die Windturbine WT3, bzw. ihr Netzanschlusspunkt, ist schwächer gekoppelt als die Windturbine WT2, ist aber stärker gekoppelt als die Windturbine WT1, weil sie in dasselbe Mittelspannungsnetz einspeist, an das auch die Stadt 56 angeschlossen ist. Die Windturbine WT4 ist insoweit noch schwächer gekoppelt als die Windturbine WT3, aber stärker als die Windturbine WT1, weil die Windturbine WT1 in ein Mittelspannungsnetz einspeist, an das eine Ortschaft 58 angeschlossen ist, wohingegen die Windturbine WT4 in ein Mittelspannungsnetz einspeist, an das zwei Ortschaften 58 angeschlossen sind. All das ist hier nur als veranschaulichendes Beispiel zu verstehen, das viele weitere Faktoren unberücksichtigt lässt. Für die beispielhaft genannten Kopplungsstärken kann eine Klassifizierung oder zahlenmäßige Bewertung Verwendet werden, z.B. eine Bewertung mit Werten von 0 bis 1. Diese Klassifizierung bzw. diese Bewertung kann vorzugsweise verwendet werden, um unterschiedlich Momentanreserven anzubieten und dann bei Bedarf auch bereitzustellen. Es kann also Abhängig einer Klassifizierung oder Bewertung der Kopplungsstärke die Reservehöhe eingestellt werden. Besonders wird vorgeschlagen, die Reservehöhe um so größer einzustellen, je größer die Kopplungsstärke ist bzw. je größer sie bewertet wurde.

Für das Beispiel der in Fig. 3 gezeigten Struktur würde das bedeuten, dass für die Windturbine WT2 die größte Momentanreserve vorzusehen wäre, also die größte Reservehöhe, und für die Windturbine WT1 die geringste.

Besonders zum Bereitstellen der benötigten Energie für eine solche Momentanreserve kann es vorteilhaft sein, die Windenergieanlage mit einer höheren Drehzahl zu betreiben, oder zumindest ein größeres Drehzahlband zuzulassen, damit eine entsprechend große Menge Rotationsenergie bereitgestellt werden kann. Meist gibt es für jede Windenergieanlage eine optimale Drehzahl zu jedem Betriebspunkt, besonders zu jeder Windgeschwindigkeit, auch wenn faktisch die Einstellung nicht über eine Messung der Windgeschwindigkeit erfolgt, kann dies doch zur Erläuterung dienen.

Dennoch kann eine Windenergieanlage mit einer höheren oder einer niedrigeren Drehzahl fast optimal betrieben werden, ohne dass große Verluste oder große Belastungen in Kauf genommen werden müssen. Wenn also eine Windenergieanlage besonders viel Momentanreserve bereitstellen soll, wie beispielsweise die Windturbine WT2 der Fig. 3, so kann dies durch Rotationsenergie in den Rotoren 108 der Windenergieanlage 100 erreicht werden. Wird die Drehzahl beispielsweise um 10 % erhöht, ist dadurch schon physikalisch etwa 20 % mehr Rotationsenergie vorhanden. Betrachtet man aber nur die abrufbare Rotationsenergie, denn es ist zweckmäßig, nur so viel Rotationsenergie abzurufen, dass die Anlage danach weiterläuft, so kann eine solche beispielhaft genannte Erhöhung der Drehzahl um 10 % bezogen auf die abrufbare Rotationsenergie eine noch viel höhere Energiebereitstellung als die genannten 20% erreichen.

Zur Umsetzung kann eine Windenergieanlage aus verschiedenen möglichen Drehzahlkennlinien eine entsprechende auswählen, nämlich eine mit höherer Drehzahl, wenn dies gewünscht ist, wie beispielsweise für die Windturbine WT2.

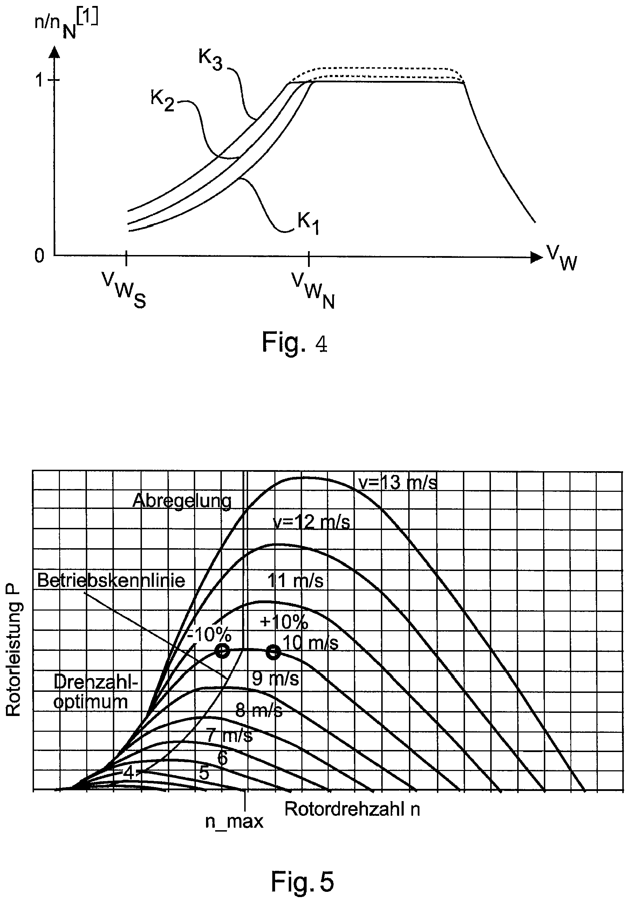

Solche unterschiedlichen Drehzahlkennlinien veranschaulicht die Fig. 4. Dort sind beispielhaft drei Drehzahlkennlinien $K_1$, $K_2$, und $K_3$ eingetragen. Diese Fig. 4 dient aber nur der Veranschaulichung, denn üblicherweise sind in einer Windenergieanlage Drehzahl-Leistungs-Kennlinien hinterlegt, aber keine Drehzahl-Windgeschwindigkeits-Kennlinien. In dem Teillastbereich, nämlich der Bereich, in dem die Windenergieanlage noch keine volle Leistung liefern kann und der in Fig. 8 zwischen der Startwindgeschwindigkeit Vws und der Nennwindgeschwindigkeit $V_{WN}$ liegt, kann unter Annahme eines optimalen stationären Betriebs jeder Windgeschwindigkeit auch eine Leistung zugeordnet werden. Jedenfalls können in diesem Teillastbereich unterschiedliche Kennlinien $K_1$, $K_2$, oder $K_3$ ausgewählt werden, je nachdem, ob eine höhere Drehzahl zum Bereitstellen einer höheren Energie gewünscht wird.

Wenn bei Nennwindgeschwindigkeit, oder früher, $V_{VN}$ Nenndrehzahl $n_N$ erreicht ist, kann aus Gründen der Anlagensicherheit meist keine höhere Drehzahl als die Nenndrehzahl verwendet werden. Allerdings könnte in Ausnahmesituationen, besonders wenn kurzzeitig mit einer Netzstützung zu rechnen ist, eine höhere Drehzahl in Betracht kommen. Das ist in Fig. 4 durch gepunktete Kennlinien im Bereich nach der Nennwindgeschwindigkeit $V_{WN}$ angedeutet.

Fig. 5 zeigt eine Schar Leistungs-/Drehzahlkurven, nämlich Leistungs-/Drehzahlkurven für unterschiedliche Windgeschwindigkeiten von 3m/s bis 13 m/s. Die Darstellung ist nur schematisch, ohne Zahlenwerte. Es könnte eine Normierung jeweils auf die Nenndrehzahl bzw. die Nennleistung des Rotors angenommen werden.

Zunächst ist zu erkennen, dass die Leistung P, die in jeder der Kurven in Abhängigkeit der Drehzahl n aufgetragen ist, mit der Drehzahl bis zu einem Maximum ansteigt. Dort ist das Leistungsoptimum. Für Windgeschwindigkeiten von 3 bis 10 m/s ist dieses Optimum durch eine die Kurvenschar schneidende Betriebskennlinie eingezeichnet. Sie erreicht bei der Kurve für 10 m/s die maximale Drehzahl und zeigt somit bis dahin das Drehzahloptimum an. Für höhere Windgeschwindigkeiten liegt das Drehzahloptimum oberhalb der maximalen Drehzahl, die als n_max eingezeichnet ist. Deshalb geht ab der Leistungs-/Drehzahlkurve für 10 m/s die Betriebskennlinie senkrecht hoch, weil dann die Anlage in Bezug auf die Drehzahl abgeregelt wird.

Exemplarisch sind in der Leistungs-/Drehzahlkurve für 10 m/s zwei zur Betriebskennlinie abweichende Arbeitspunkte eingetragen, die um etwa 10% unter bzw. über der optimalen Drehzahl liegen. Es ist zu erkennen, dass diese Drehzahlabweichung von der optimalen Drehzahl nur zu einer wesentlich geringeren Verringerung der Leistung führt. Diese beiden abweichenden Arbeitspunkte können ein Drehzahlband angeben, in dem die Windenergieanlage operieren kann, um Momentanreserve bereitzustellen. Dieses Drehzahlband kann vorzugsweise in Abhängigkeit von Randbedingungen, für unterschiedliche Windenergieanlage, für unterschiedliche Netzanschlusspunkte und/oder für unterschiedliche Situationen unterschiedlich breit gewählt werden.

Die vorgeschlagene Lösung schafft somit Möglichkeiten zur Netzstützung durch gezielte Bereitstellung von Momentanreserven, die sich an der Struktur des elektrischen Versorgungsnetzes orientieren kann. Dadurch kann auch das dynamische Verhalten des elektrischen Versorgungsnetzes insgesamt positiv beeinflusst werden.

Fig. 6 veranschaulicht einen Netzabschnitt 650, der ein Großkraftwerk 652, Siedlungen 658, einen industriellen Verbraucher 654, eine Stadt 656 und mehrere Windparks WP1 bis WP3 aufweist. Diese Elemente stehen jeweils auch exemplarisch für weitere Elemente ihrer Art und sind zur Veranschaulichung jeweils über einen Transformator T mit einer gemeinsamen Leitung verbunden. Die Darstellung lehnt sich z.T. an die Darstellung der Fig. 3 an, wobei vereinfachend die Unterscheidungen der unterschiedlichen Spannungshöhen des Netzes nicht gemacht werden.

Mit den exemplarischen Windparks WP1 bis WP3 kann elektrische Leistung in das elektrische Versorgungsnetz 650 eingespeist werden. Diese Windparks WP1 bis WP3 arbeiten grundsätzlich eigenständig. Hier wird aber vorgeschlagen, dass sie Momentanreserve anbieten und bereitstellen können und dass das koordiniert wird durch die Netzsteuereinrichtung 651. Dazu kann die Netzsteuereinrichtung 651 für jeden der Windparks WP1 bis WP3 eine Reservehöhe vorgeben und an den jeweiligen Windpark WP1, WP2 bzw. WP3 übertragen. Zur Übertragung ist ein Übertragungsmittel vorgesehen, das über einen Datenübertragungskanal 653 Daten an die Windparks Wp1 bis WP3 überträgt. die dort jeweils über eine Schnittstelle eingegeben werden. Jeder Windpark WP1 bis WP3 kann dazu eine zentrale Parksteuereinheit aufweisen, um die von der Netzsteuereinrichtung 651 vorgegebene Reservehöhe auf die Windenergieanlagen des Windparks aufzuteilen.

Eine Kommunikation zwischen den Windparks WP1 bis WP3 und der Netzsteuereinrichtung 651 kann auch bidirektional erfolgen, wie die jeweilige Darstellung der Datenübertragungskanäle mit Pfeilen in beide Richtungen veranschaulicht. Die Übertragung kann kabelgebunden oder kabellos oder in Kombination aus beidem erfolgen.

Dadurch kann die Netzsteuereinrichtung 651 auch Daten des jeweiligen Windparks berücksichtigen. Es kann erreicht werden, Zustände des jeweiligen Windparks WP1, WP2 bzw. WP3 zu berücksichtigen. Die bidirektionale Informationsübertragung eröffnet auch die Möglichkeit, dass der Windpark als Messsensor fungiert und Messwerte des elektrischen Versorgungsnetzes 650 aufnimmt, insbesondere Spannung und Frequenz, und diese Messdaten zur weiteren Verwendung an die Netzsteuereinrichtung überträgt.

Vorzugsweise werden Informationen zur tatsächlichen Einspeisung von Momentanreserve an die Netzsteuereinrichtung 651 übertragen. Die Netzsteuereinrichtung 651 kennt vorzugsweise auch die angebotenen Momentanreserven und kann das ihrerseits an eine weitere Leitzentrale weitergeben und/oder für die Bestimmung der jeweiligen Reservehöhen auswerten.

### Patentansprüche

1. Verfahren zum Einspeisen elektrischer Leistung an einem Netzanschlusspunkt (118) in ein elektrisches Versorgungsnetz mittels wenigstens einer Windenergieanlage (100) umfassend die Schritte:

   - Erzeugen elektrischer Leistung aus Wind,
   - Einspeisen der erzeugten Leistung oder eines Teils davon in das elektrische Versorgungsnetz,
   - Anbieten einer Momentanreserve zum zusätzlichen Einspeisen oder Verringern des Einspeisens in das elektrische Versorgungsnetz zur Stützung des elektrischen Versorgungsnetzes und
   - zusätzliches Einspeisen elektrischer Leistung oder Reduzieren der eingespeisten Leistung bis zur angebotenen Momentanreserve, in Abhängigkeit einer Netzeigenschaft und/oder einer externen Anforderung, um das elektrische Versorgungsnetz zu stützen, wobei
   - die Höhe der angebotenen Momentanreserve als Reservehöhe (Angebotshöhe) einstellbar ist, wobei
   die Reservehöhe in Abhängigkeit wenigstens eines Kriteriums eingestellt wird, das ausgewählt ist aus der Liste aufweisend
   - eine Kurzschlussleistung am Netzanschlusspunkt,
   - eine Netzimpedanz am Netzanschlusspunkt,
   - ein Kurzschlussstromverhältnis am Netzanschlusspunkt und
   - ein Erkennen einer Teilnetzbildung.

2. Verfahren zum Einspeisen nach Anspruch 1, **dadurch gekennzeichnet, dass** die Reservehöhe in Abhängigkeit einer Eigenschaft des Netzanschlusspunktes (118) eingestellt wird, und oder, dass das zusätzliche Einspeisen elektrischer Leistung bzw. das Reduzieren der eingespeisten Leistung über eine Einstellfunktion von einem Zustand des elektrischen Versorgungsnetzes abhängt und von der Reservehöhe abhängt und optional, dass die Reservehöhe als Verstärkung der Einstellfunktion wirkt.

3. Verfahren nach einem der vorstehenden Ansprüche, **dadurch gekennzeichnet, dass** an die wenigstens eine Windenergieanlage über eine Schnittstelle ein Vorgabewert zum Verändern der Reservehöhe eingegeben wird und außerdem oder alternativ die wenigstens eine Windenergieanlage ihre eingestellte Reservehöhe als Information bereitstellt, insbesondere anderen Windenergieanlagen und/oder einer zentralen, mehrere Netzanschlusspunkte überwachende Steuereinheit.

4. Verfahren nach einem der vorstehenden Ansprüche, **dadurch gekennzeichnet, dass** eine Momentanreserve in Höhe der Reservehöhe bereitgestellt wird durch wenigstens eine Maßnahme aus der Liste bestehend aus

   - Vorsehen eines Drehzahlbereichs zum Betreiben der Windenergieanlage mit einer Drehzahl in diesem Bereich, wobei der Drehzahlbereich und die Drehzahl so gewählt werden, dass eine Absenkung der Drehzahl bis zu einem unteren Wert des Drehzahlbereichs die Momentanreserve in Höhe der Reservehöhe aus Rotationsenergie bereitstellen kann,
   - Vorsehen einer unteren Drehzahl und einer um eine Differenzdrehzahl zu der unteren Drehzahl erhöhten oberen Drehzahl, und Betreiben der Windenergieanlage bei der oberen Drehzahl, wobei die Differenzdrehzahl so gewählt ist, dass durch Absenken der oberen Drehzahl auf die untere Drehzahl eine Rotationsenergie als Momentanreserve in Höhe der Reservehöhe freisetzbar ist,
   - Verändern eines Arbeitspunktes der wenigstens einen Windenergieanlage und
   - Vorsehen eines elektrischen Energiespeichers mit darin in Höhe der Reservehöhe gespeicherter und abrufbarer Speicherenergie.

5. Verfahren nach einem der vorstehenden Ansprüche, **dadurch gekennzeichnet, dass** im elektrischen Versorgungsnetz eine ein Schwingen der Frequenz im elektrischen Versorgungsnetz beschreibende Netzpendelung erfasst wird, und die Reservehöhe in Abhängigkeit der erfassten Netzpendelung oder eingestellt wird, und/oder, dass die Reservehöhe in Abhängigkeit einer Kopplungsstärke des Netzanschlusspunktes eingestellt wird, die ein Maß dafür ist, wie stark der Netzanschlusspunkt mit dem elektrischen Versorgungsnetz gekoppelt ist.

6. Verfahren nach einem der vorstehenden Ansprüche, **dadurch gekennzeichnet, dass** zur Netzstützung das zusätzliche Einspeisen elektrischer Leistung bzw. das Reduzieren der eingespeisten Leistung in Abhängigkeit wenigstens eines der Kriterien durchgeführt wird aus der Liste bestehend aus:

   - einer Netzspannungsänderung des elektrischen Versorgungsnetzes,
- einer Netzfrequenzänderung des elektrischen Versorgungsnetzes,
- einer Leistungsdifferenz zwischen erzeugter und verbrauchter Leistung im elektrischen Versorgungsnetz und
- einer von extern übermittelten Anforderung.

7. Verfahren nach einem der vorstehenden Ansprüche, **dadurch gekennzeichnet, dass** zur Netzstützung das zusätzliche Einspeisen elektrischer Leistung bzw. das Reduzieren der eingespeisten Leistung unter Entnahme bzw, Einspeicherung von

- Speicherenergie wenigstens eines Kondensatormittels,
- Rotationsenergie der wenigstens einen Windenergieanlage und
- Speicherenergie wenigstens eines Batteriespeichers

vorgenommen wird, wobei abhängig von der zu entnehmenden bzw. einzuspeichernden Energiemenge
- zuerst Speicherenergie aus dem Kondensatormittel entnommen bzw. eingespeichert wird,
- dann Rotationsenergie aus der wenigstens einen Windenergieanlage verwendet wird, wenn noch weitere Energie benötigt wird und
- dann Speicherenergie aus dem Batteriespeicher verwendet wird, wenn noch weitere Energie benötigt wird.

8. Verfahren zum Einspeisen elektrischer Leistung an mehreren Netzanschlusspunkten (118) in ein elektrisches Versorgungsnetz (120) mittels jeweils wenigstens einer Windenergieanlage (100), wobei zum Einspeisen an jedem der Netzanschlusspunkte jeweils ein Verfahren nach einem der vorstehenden Ansprüche verwendet wird und die Reservehöhe für jeden der Netzanschlusspunkte unterschiedlich einstellbar ist.

9. Verfahren nach Anspruch 8, **dadurch gekennzeichnet, dass** für die mehreren Netzanschlusspunkte zusammen eine insgesamt angebotene Momentanreserve der Höhe nach vorgegeben wird und davon abhängig für jeden dieser Netzanschlusspunkte eine Reservehöhe bestimmt wird, insbesondere so, dass die Summe dieser Reservehöhen der Höhe der insgesamt angebotenen Momentanreserve entspricht.

10. Windenergieanlage (100) zum Einspeisen elektrischer Leistung an einem Netzanschlusspunkt (118) in ein elektrisches Versorgungsnetz (120) umfassend:

- einen aerodynamischen Rotor (106) und einen Generator zum Erzeugen elektrischer Leistung aus Wind,
- eine Einspeiseeinheit zum Einspeisen der erzeugten Leistung oder eines Teils davon in das elektrische Versorgungsnetz (120),
- eine Steuereinheit zum Anbieten einer Momentanreserve zum Einspeisen in das elektrische Versorgungsnetz (120) zur Stützung des elektrischen Versorgungsnetzes,
- ein Steuermittel zum Steuern der Windenergieanlage (100) so, dass die angebotene Momentanreserve oder ein Teil davon, in Abhängigkeit einer Netzeigenschaft und/oder einer externen Anforderung in das elektrische Versorgungsnetz eingespeist wird, um das elektrische Versorgungsnetz zu stützen, und
- ein Einstellmittel zum Einstellen der Höhe der angebotenen Momentanreserve als Reservehöhe (Angebotshöhe), wobei
die Windenergieanlage dazu vorbereitet ist, dass die Reservehöhe in Abhängigkeit wenigstens eines Kriteriums eingestellt wird, das ausgewählt ist aus der Liste aufweisend
- eine Kurzschlussleistung am Netzanschlusspunkt,
- eine Netzimpedanz am Netzanschlusspunkt,
- ein Kurzschlussstromverhältnis am Netzanschlusspunkt und
- ein Erkennen einer Teilnetzbildung.

11. Windenergieanlage nach Anspruch 10, **dadurch gekennzeichnet, dass** sie dazu vorbereitet ist, ein Verfahren gemäß einem der Ansprüche 1 bis 7 auszuführen, und/oder, dass die Windenergieanlage **gekennzeichnet ist durch** wenigstens einen elektrischen Energiespeicher zum Bereitstellen der Momentanreserve oder eines Teils davon, insbesondere wenigstens einen Batteriespeicher und/oder ein Kondensatormittel, insbesondere eine Kondensatorbank.

12. Windpark (112) mit mehreren Windenergieanlagen (100), wobei

- eine, mehrere oder alle der Windenergieanlagen (100) gemäß einem der Ansprüche 10 oder 11 ausgebildet sind und/oder
- der Windpark (112) dazu vorbereitet ist, ein Verfahren gemäß einem der Ansprüche 1 bis 7 auszuführen.

13. Netzsteuereinrichtung (651) zum Steuern mehrerer Einspeiseeinrichtungen (WP1, WP2, WP3) zum Einspeisen elektrischer Leistung in ein elektrisches Versorgungsnetz (650), wobei

- jede Einspeiseeinrichtung

- wenigstens eine Windenergieanlage zum Erzeugen elektrischer Leistung aus Wind umfasst,

- eine Einspeiseeinheit aufweist zum Einspeisen der erzeugten Leistung oder eines Teils davon jeweils über einen Netzanschlusspunkt in das elektrische Versorgungsnetz

- eine Steuereinheit zum Anbieten einer Momentanreserve zum Einspeisen in das elektrische Versorgungsnetz zur Stützung des elektrischen Versorgungsnetzes und

- ein Einstellmittel zum Einstellen der Höhe der angebotenen Momentanreserve als Reservehöhe (Angebotshöhe), und

- die Netzsteuereinrichtung umfasst

- ein Datenübertragungsmittel zum Austausch von Daten zwischen der Netzsteuereinrichtung und den Einspeiseeinrichtungen, und

- ein Vorgabemittel zum Vorgeben jeweils unterschiedlicher Reservehöhen an die Einspeiseeinrichtungen zum Einstellen der Höhe der angebotenen Momentanreserve, wobei

die Netzsteuereinrichtung dazu vorbereitet ist, dass die jeweilige Reservehöhe jeweils in Abhängigkeit wenigstens eines Kriteriums eingestellt wird, das ausgewählt ist aus der Liste aufweisend

- eine Kurzschlussleistung am Netzanschlusspunkt,

- eine Netzimpedanz am Netzanschlusspunkt,

- ein Kurzschlussstromverhältnis am Netzanschlusspunkt und

- ein Erkennen einer Teilnetzbildung.

14. Netzsteuereinrichtung (651) nach Anspruch 13, **dadurch gekennzeichnet, dass**
jede Einspeiseeinrichtungen jeweils als Windpark gemäß Anspruch 12 ausgebildet ist oder wenigstens eine Windenergieanlage gemäß einem der Ansprüche 10 oder 11 aufweist, und/oder, dass sie wenigstens

- einen Messaufnehmer aufweist zum Aufnehmen von Netzzuständen des elektrischen Versorgungsnetzes und

- eine Evaluierungsvorrichtung zum Bestimmen der Reservehöhen in Abhängigkeit wenigstens eines der aufgenommenen Netzzuständen.

15. Netzsteuereinrichtung (651) nach einem der Ansprüche 13 oder 14, **dadurch gekennzeichnet, dass** sie dazu vorbereitet ist, ein Verfahren nach einem der Ansprüche 8 oder 9 auszuführen oder zu koordinieren.

Fig. 1

EP 4 220 888 A2

Fig. 2

17

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030155773 A1
- WO 9933165 A
- US 20060142899 A1
- EP 1790850 B1
- US 20110074151 A1
- US 20140316592 A1
- WO 9933165 A1
- WO 2014121794 A1

**In der Beschreibung aufgeführte Nicht-Patentliteratur**

- **RUTTLEDGE, L ; FLYNN, D.** Emulated Inertial Response From Wind Turbines: Gain Scheduling and Resource Coordination. *IEEE Transactions on Power Systems,* 28. Dezember 2015, vol. 31 (5), 3747-3755